(19) **Europäisches Patentamt European Patent Office Office européen des brevets**

(11) **EP 2 686 966 B1**

(12) **EUROPEAN PATENT SPECIFICATION**

(45) Date of publication and mention of the grant of the patent:
**16.03.2016 Bulletin 2016/11**

(21) Application number: **11861867.7**

(22) Date of filing: **18.03.2011**

(51) Int Cl.:
*H04B 3/30* *(2006.01)*     *H04B 15/02* *(2006.01)*

(86) International application number:
**PCT/SE2011/050304**

(87) International publication number:
**WO 2012/128676 (27.09.2012 Gazette 2012/39)**

(54) **METHOD AND ARRANGEMENT FOR SUPPORTING TRANSMISSION OVER DIGITAL SUBSCRIBER LINES**

VERFAHREN UND ANORDNUNG ZUR UNTERSTÜTZUNG DER ÜBERTRAGUNG ÜBER DIGITALE TEILNEHMERANSCHLUSSLEITUNGEN

PROCÉDÉ ET CONFIGURATION PERMETTANT LA PRISE EN CHARGE DE LA TRANSMISSION SUR DES LIGNES D'ACCÈS NUMÉRIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.01.2014 Bulletin 2014/04**

(73) Proprietor: **Telefonaktiebolaget LM Ericsson (publ)**
**164 83 Stockholm (SE)**

(72) Inventors:
• **FERTNER, Antoni**
**S-113 44 Stockholm (SE)**
• **BERG, Miguel**
**S-194 67 Upplands Väsby (SE)**
• **CEDERHOLM, Daniel**
**S-170 66 Solna (SE)**
• **ERICSON, Klas**
**S-125 30 Älvsjö (SE)**

(74) Representative: **Bergenstråhle Group AB**
**P.O. Box 17704**
**118 93 Stockholm (SE)**

(56) References cited:
**EP-A1- 2 383 896      WO-A1-2008/094082**
**WO-A1-2010/028018      WO-A2-2008/016585**

**Description**

<u>TECHNICAL FIELD</u>

The invention relates generally to transmission over Digital Subscriber Lines (xDSLs), and particularly to the handling of Repetitive Electrical Impulse Noise (REIN) on said subscriber lines.

<u>BACKGROUND</u>

The VDSL2 (Very High Speed DSL) is a high speed network access technology allowing transmission of asymmetric or symmetric data at rates up to 200Mbits/s over twisted pair, using a bandwidth of 30 MHz. To reach such high data rates, various noise sources introducing noise to the transmission channel must be detected in order to enable compensation for said introduced noise, and thereby reduce transmission errors. There are several distinct noise types which may be observed in real deployment scenarios, some important being: Repetitive Electrical Impulse Noise (REIN), Prolonged Electrical Impulse Noise (PEIN), Single Isolated Electrical Impulse Noise (SHINE), Radio Frequency Interference (RFI) Ingress, Fluctuating Crosstalk etc. Of the noise types mentioned above, only REIN has a repetitive character.

The repetitive noise, REIN, may originate from various noise sources, such as e.g. faulty power supply units, damaged thermostats, dimmers, fluorescent lights, security systems, electric motors and internal power cables, e.g. located close to xDSL equipment at the Customer Premises. The repetitive noise from such sources can be characterized as signals with arbitrary spectra repeated in regular intervals of time.

A Discrete Multi-Tone (DMT) symbol sent over e.g. an ADSL (Asymmetric DSL) or VDSL loop can be severely affected by REIN. Data loss caused by REIN can be mitigated to a certain degree, e.g. by use of block codes combined with interleaving, or by use of retransmission or by localization and elimination of the noise source.

WO 2008/094082 A1 discloses a method for monitoring noise on a twisted pair cable adapted to transfer data comprising DSL signals. WO 2008/016585 A2 discloses a method involving determining whether the data indicative of DSL link stability level is above or below a minimum threshold value. WO 2010/028018 A1 discloses a method for using histograms produced by the DSL standard to determine different statistics regarding REIN.

Error correction mechanisms such as e.g. Reed Solomon encoding and interleaving are typically configured using a factor called Impulse Noise Protection (INP). The higher the INP value, the lower the effective data rate on the line. The lower the INP value, the shorter the impulse noise bursts can be, against which protection is provided. Further, error correction mechanisms require monitoring and precise characterization of the impulse noise. In other words, an accurate characteristic of the REIN needs to be available in order to optimally configure the forward error correction parameters on a digital communication line. Such accurate characteristics of the REIN are typically not available nor provided.

Thus, an efficient method for handling REIN would be of great value.

<u>SUMMARY</u>

It would be desired to obtain an estimate of the REIN in xDSL lines. It is an object of the invention to address at least some of the issues outlined above. Further, it is an object of the invention to provide a method and an arrangement for supporting transmission over xDSL in the presence of REIN by enabling estimation of the REIN. These objects may be met by a method an arrangement according to the attached independent claims. Optional embodiments are set forth in the independent claims.

The suggested method and arrangement provides a simple, fast and efficient scheme for characterization of a repetitive disturber and an accompanying additive noise, which characterization may be used to improve transmission quality by accordingly applying appropriate signal processing. For example, the scheme gives useful and reliable data to error correcting mechanisms, such as optimal coding, interleaving and/or frequency scheduling, and/or RS-Erasure decoding and Frame Blanking/Repeating.

The suggested method and arrangement allow monitoring of the disturber close to the physical phenomenon, as opposed to the normal case where disturbers are monitored through indirect events such as the number of bit errors. Further, the proposed method and arrangement allow classification of a disturber and a precise identification of its distinctive attributes. Consequently, the identified attributes of a disturber may be identified e.g. as the attributes of a typical equipment failure e.g. a faulty power supply. Thus, the proposed method and arrangement may further enable finding and eliminating the source of the disturbance.

Further, the suggested method and arrangement enable determining the "non-REIN"- noise.

According to a first aspect a method is provided for supporting transmission over xDSL in the presence of REIN. The method comprises obtaining a power spectrum of measured Quiet Line Noise (QLN). The QLN power spectrum is a power spectrum measured at an xDSL line terminal, e.g. CPE, when no transmission is present. A periodicity in the QLN power spectrum is detected, and the repetition interval of the periodicity is determined. Then, the power spectrum of a REIN comprised in the QLN power spectrum is estimated based on the repetition interval of said periodicity. Information associated with the estimated REIN power spectrum is provided for use in mitigation of potentially unfavorable influence/effects of the REIN on said transmission over the xDSL.

According to a second aspect, an arrangement is provided in a transceiver node for supporting transmission over xDSL in the presence of REIN. The arrangement comprises a functional unit adapted to obtain a power spectrum of the measured QLN for the xDSL; and a functional unit, adapted to detect a periodicity in the QLN power spectrum, and to determine the repetition interval of said periodicity. The arrangement further comprises a functional unit adapted to estimate the power spectrum of the REIN, based on the repetition interval of said periodicity; and a functional unit adapted to provide information associated with the estimated REIN power spectrum for use in mitigation of potentially unfavorable influence/effects of the REIN on said transmission over the xDSL.

The above method and arrangement may be implemented in different embodiments. In some embodiments, the estimated REIN power spectrum is removed from the QLN power spectrum, which provides a power spectrum of the remaining QLN, which then may be analyzed. The procedure may be iterated until a predefined termination criterion is fulfilled, such that further REIN components may be found.

The provided information may be used for adapting e.g. encoding, interleaving and/or frequency scheduling associated with the transmission over the xDSL, thus improving e.g. the transmission resource utilization. The provided information may comprise indication(s)/information on one or more frequencies (e.g. the first frequency) in which the estimated REIN power spectrum contributes to the QLN power spectrum measure; the interval between frequencies in which the estimated REIN power spectrum contributes to the QLN power spectrum measure; the time interval between REIN events, and/or information related to the remaining QLN power spectrum after removal of the estimated REIN power spectrum.

In some embodiments the estimated REIN power spectrum may be isolated from the QLN power spectrum. An inverse Fourier transform (or similar) may be performed on the isolated REIN power spectrum, such that a single REIN event is reconstructed. The characteristics of the reconstructed REIN event may be used as base for identifying the REIN source type.

In some embodiments the magnitude of the remaining QLN after removal of the estimated REIN power spectrum from the QLN power spectrum may be estimated. The estimate may be used for refining the REIN estimate.

Further, the statistic of the remaining QLN power spectrum may be estimated, and used e.g. for refining an estimate of the remaining QLN. Further, which is an important advantage, the type of REIN source may be identified, based on the characteristics of the REIN.

The embodiments above have mainly been described in terms of a method. However, the description above is also intended to embrace embodiments of the arrangement, adapted to enable the performance of the above described features. The different features of the exemplary embodiments above may be combined in different ways according to need, requirements or preference.

BRIEF DESCRIPTION OF THE DRAWINGS

The invention will now be described in more detail by means of exemplifying embodiments and with reference to the accompanying drawings, in which:

Figure 1 shows a Dirac comb in the time domain.

Figure 2 shows a Dirac comb in the time domain and a corresponding Dirac comb in the frequency domain.

Figure 3 shows the power spectrum of an example of a single REIN event.

Figure 4 shows the power spectrum of multiple consecutive REIN events based on the single REIN event in figure 3.

Figure 5 shows an example of measured REIN inference in the time domain.

Figure 6a shows the power spectrum of the REIN inference illustrated in figure 5.

Figure 6b shows an enlarged section of the power spectrum in figure 6a.

Figure 7a shows a power spectrum of a REIN event, extracted from a measured QLN power spectrum, according to an exemplifying embodiment.

Figure 7b shows a comparison in the time domain of an actual REIN event (cf. one period in figure 5) and a reconstructed REIN event (cf figure 7a), in accordance with an exemplifying embodiment.

Figures 8a-b show a comparison between results of the non-weighed cepstrum method and a suggested ad-hoc method (inverse of the power spectrum of the QLN) used for identifying the periodicity of a REIN signal according to exemplifying embodiments. Figure 8b shows an enlarged version of the comparison around quefrency 200.

Figure 9 shows an example of statistical analysis made on the QLN probability density function (PDF) after removal of the identified REIN contribution. It illustrates that the reconstructed QLN noise can be applied to estimate PDF and rms value of the accompanying additive noise.

Figures 10-11 are flow charts illustrating procedures performed in transceiver node, according to exemplifying embodiments.

Figure 12 is a block diagram illustrating an arrangement adapted for performing the suggested procedure in a transceiver node, according to an exemplifying embodiment.

Figure 13 is a block diagram illustrating an arrangement adapted in a transceiver node, according to an exemplifying embodiment.

DETAILED DESCRIPTION

The following description generally relates to impulse noise monitoring in digital data communications systems, in particular to the detection and characterization of REIN.

A disturbing REIN signal is characterized by that a REIN event or burst, having a specific spectrum, is repeated periodically with the period $T$. Hence, a REIN signal can be described in the time domain as a convolution of a REIN event and a Dirac comb (defined below). The observed power spectrum of such a signal will have a distinctive special structure. This special structure may be utilized, such that the spectrum of the disturbing REIN signal may be separated or extracted from the (omnipresent) accompanying additive noise. Consequently, a method has been developed to derive the specific structure of the REIN from an observed power spectrum. The power spectrum used as input to the method is the power spectrum of a measured Quiet Line Noise (QLN) sequence in a subscriber line. As previously mentioned, the QLN power spectrum is measured at an xDSL line terminal when no transmission is present on said line. Such a power spectrum is available in practically all standard xDSL transceivers of today. The method may thus easily be added and applied in standard equipment, which is very advantageous.

Below, the analysis and observations, which the suggested scheme is based on, will be described.

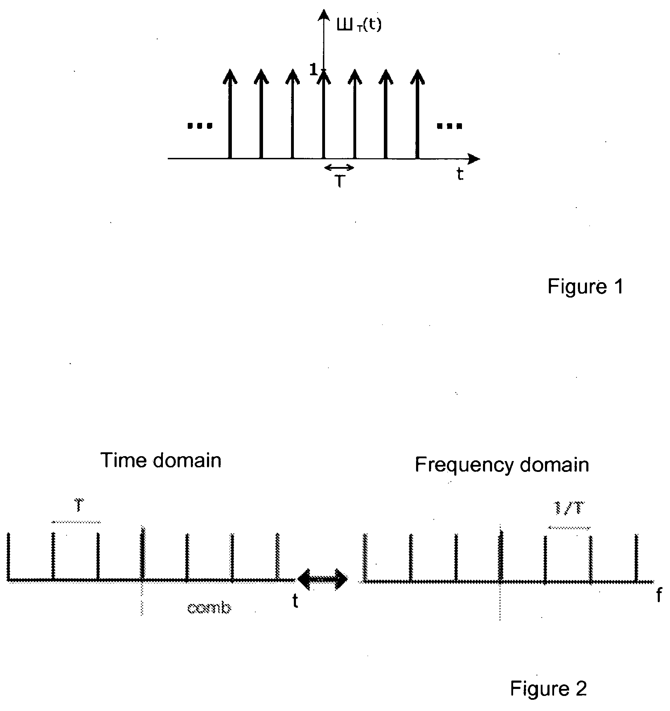

A Dirac comb, $\Delta_\tau(t)$, is an infinite series of equidistant Dirac impulses; where adjacent impulses are $T$ seconds apart, meaning that the impulses are spaced a "distance" $T$. In mathematics, a Dirac comb is also known as an "impulse train", a sampling function, or as a "Shah" function ш (possibly because it visually resembles the shape of this Cyrillic letter). Figure 1 shows a Dirac comb in the time domain. Since a Dirac comb is periodic, it can be represented in the time domain as an infinite Fourier series:

$$\Delta_T(t) = \sum_{k=-\infty}^{\infty} \delta(t - kT) = \frac{1}{T}\sum_{n=-\infty}^{\infty} e^{i2\pi knt/T} \quad (1)$$

Consequently, the Fourier transform of a Dirac comb is also a Dirac comb, though in the frequency domain:

$$\sum_{k=-\infty}^{\infty} \delta(t - kT) \overset{F}{\leftrightarrow} \frac{1}{T}\sum_{n=-\infty}^{\infty} \delta(f - \frac{n}{T})$$

where the spacing between Dirac impulses in the frequency domain equals $\Delta f = \frac{1}{T}$. A Dirac comb in the time domain and frequency domain, respectively, is illustrated in figure 2.

A repetitive disturber, of which one single event or period has a duration $T$, may be considered in the time domain as a convolution of a Dirac comb, with period $T$, and a time-limited disturbance event, $x(t)$. The disturbance is assumed to possess a unique Fourier transform, $X(f)$. As a consequence of the above, a periodicity in a QLN power spectrum may be related to a repetition frequency of a single REIN event, the REIN being regarded as a single REIN event being repeated with a certain frequency. It has now been realized that this may be used for supporting mitigation of REIN, given some assumptions which will be described further below.

Some basic properties of Fourier transform which will be applicable in this case are described below.

Physically, a signal $x(t)$ in the time domain is a real function of time.

Consequently, the spectrum, $X(f)$, of the signal in the frequency domain, is complex and Hermite symmetric. Typically, the phase information is lost or destroyed during the process of measuring QLN. Thus, in practice, related to measured xDSL QLN, only the power spectrum, but no phase information, is available...

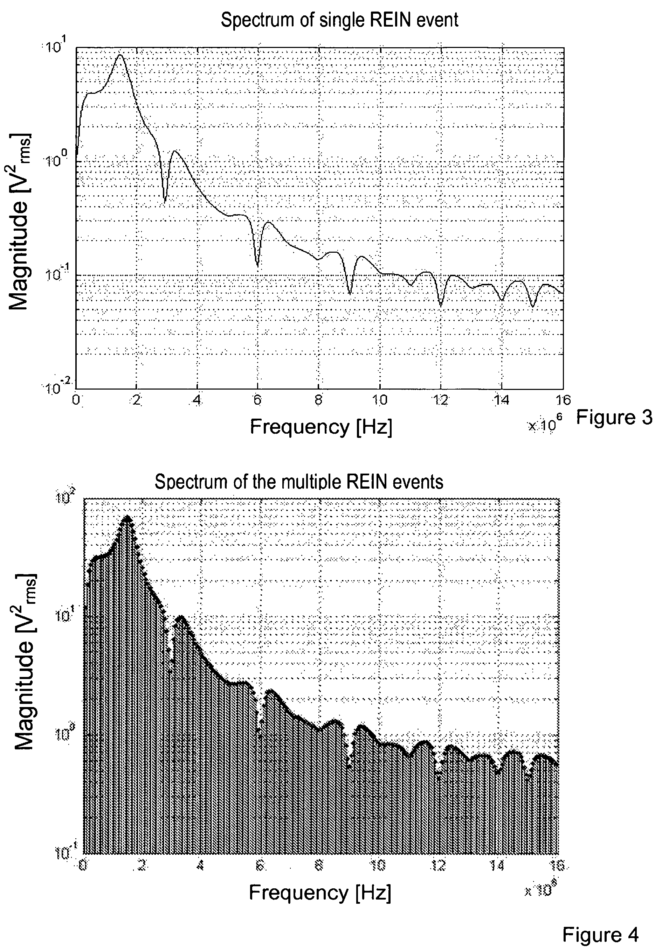

The power spectrum of a single REIN event is illustrated in figure 3, and the power spectrum of a plurality of consecutive REIN events, i.e. a REIN signal covering a plurality of periods T, is illustrated in figure 4. The power spectrum in figure 4 corresponds to the power spectrum of a convolution in the time domain of a single REIN event and a Dirac comb in the time domain.

At this point the goal or aim is to derive a simple but accurate estimator of the

- REIN repetition frequency, and

- REIN disturber power spectrum (form)

in order to enable optimal configuration of e.g. encoding and interleaving algorithms applied to mitigate line interference/disturbers.

The famous convolution theorem states that the convolution of two functions in one domain corresponds to multiplication of their Fourier transforms in another domain. A train of disturbance events, $x_T(t)$, may be described as the time-domain convolution:

$$x_T(t) = X(t) \otimes \sum_{k=-\infty}^{\infty} \delta(t - kT)$$

where $x(t)$ denotes a single disturbance event. As stated above, a convolution in the time domain corresponds to a multiplication in the frequency domain:

$$X_T(f) = X(f) \cdot \frac{1}{T} \sum_{n=-\infty}^{\infty} \delta\left(f - \frac{n}{T}\right) \quad (2)$$

Consequently, the resulting spectrum consists of distinct, isolated lines of the initial spectrum, $x(f)$, which lines are spaced by $\Delta f = \frac{1}{T}$. (cf. figures 3 and 4)

The fundamental frequency, i.e. the frequency ($\neq 0$) corresponding to the first peak of the power spectrum, can be determined as $f_0 = \Delta f = \frac{1}{T}$. Even if $f_0$, for some reason, cannot be measured, it ($f_0$) can be determined from the spacing of the consecutive maxima (minima).

This described structure of the spectrum may be exploited threefold:

- to find the frequency of repetition, i.e. the fundamental frequency, $f_0$,
- realizing the fact that the spectrum of a single disturbing event is spread through the "measured" spectrum with equidistant intervals, which intervals are equal to the repetition frequency, and thus, that it is possible to retrieve the single event spectrum by decimating the "measured" spectrum, which makes it possible to reconstruct the disturbing event, and thus possibly identify the source.
- to precisely estimate the "non-REIN" quiet line noise, by removing the "lines" or frequency bins corresponding to the disturbing event from the measured power spectrum.

The measured spectrum of a disturbing event will also comprise additive background noise. However, once the "spectral profile" of the disturber is derived, the spectral content of the disturber can be separated from the background noise, which then may be estimated.

The theory presented above agrees very well with simulations and measurements made at the lab, which will be described below.

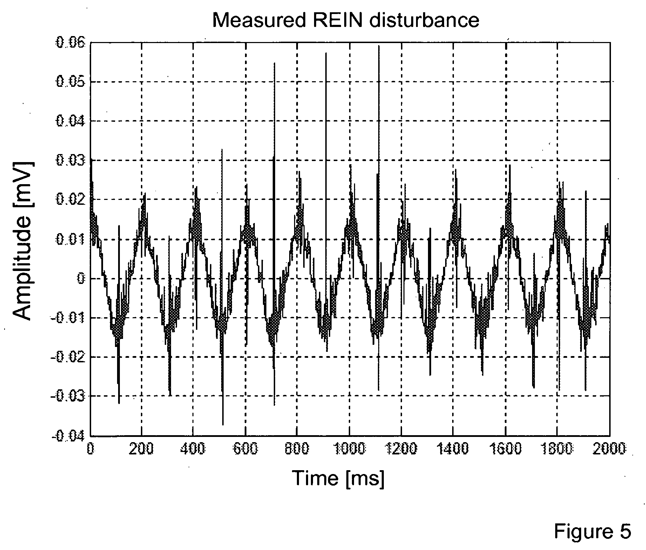

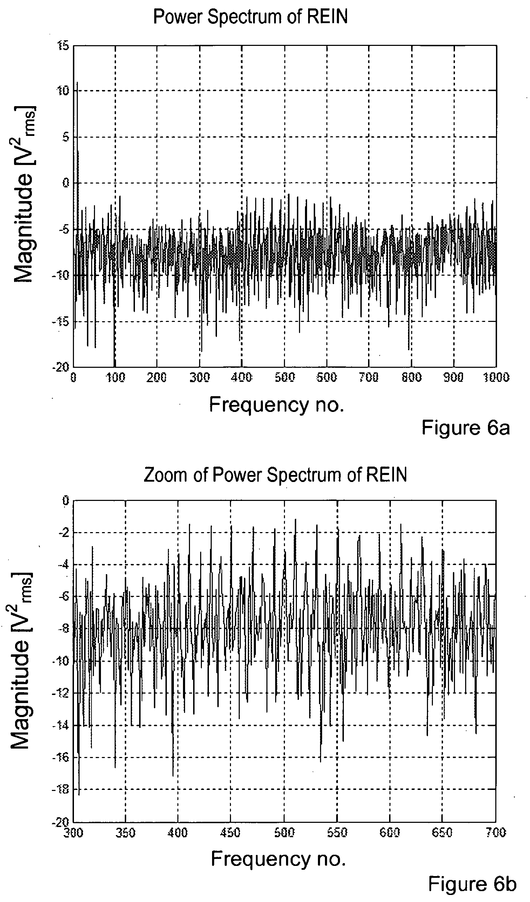

A number of faulty power supplies (aggregates) from various manufacturers have been used to generate REIN and induce controlled REIN on xDSL lines. Time domain signals comprising the generated REIN were recorded as reference signals, to which theoretically reconstructed signals could be compared. Figure 5 shows an example of a disturbing signal in the time domain, which was achieved by use of one of the faulty power supplies. The input data for the analysis according to the suggested scheme is, as previously mentioned, a measured power spectrum. Such a measured power spectrum, corresponding to the disturber illustrated in figure 5, is illustrated in figure 6a. When "zooming in" on a part of the power spectrum in figure 6a, which zoom is illustrated in figure 6b, a characteristic periodic pattern consisting of multiplies of the fundamental frequency, $f_0$, may be recognized.

The fundamental repetition frequency $f_0$ may be retrieved even if some part of spectra is missing, which will be exemplified below.

Correct estimation of the fundamental frequency, $f_0$ of a REIN disturber is an important factor for a process of limiting the adverse influence of the disturber on the transmission quality, measured e.g. in bit error rate.

As previously mentioned, the frequency corresponding to the first spectral line related to the disturber, but not $f = 0$, is the fundamental, or repetition frequency $f_0$. This fundamental frequency can also be achieved or derived by analyzing other parts of the spectrum. For example, the spacing $\Delta f$ between two consecutive frequency lines related to the REIN disturber indicates or represents the frequency of repetition $f_0$. Thus, the fundamental frequency may be retrieved even when parts of the spectrum is missing, even the lowest part of the spectrum comprising $f_0$.

Feature extraction by Ceptstrum transform

In general signal processing, the Cepstrum-based feature extraction technique is a standard method for analysis of a power spectrum to find a repetition frequency obscured by accompanying noise. Now, if the repetitive spectral lines in the power spectrum are assumed to be a function of the disturbing impulses, the cepstrum will reproduce the periodic nature of the disturbing impulses. The cepstrum will namely exhibit a so-called "quefrency" line and its multiples, matching the period of an original, time-domain signal. The "Cepstrum" may in a simplified manner be described as "the spectrum of the spectrum". The power cepstrum is defined as the squared magnitude of the Fourier transform of the logarithm of the power spectrum

$$C_X = \left| \textit{fft} \left\{ \log\left( \left| \textit{fft} \, \{x(t)\} \right|^2 \right) \right\} \right|^2$$

where $\sqcup\!\!\sqcup$ is the power spectrum.

It is also advantageous to apply window functions to improve the performance of the standard cepstrum analysis. There are several schemes on how to choose/design an appropriate window for this purpose.

Feature extraction by inverted Fourier transform

There are numerous signal processing techniques which may be used for estimating a fundamental frequency $f_0$. Here, as an alternative to Cepstrum analysis, a simple ad-hoc method is proposed, which is based on the following observation. Referring to equation (2), it may be noticed that a Dirac comb in the time domain may be interpreted as an infinite geometric series in frequency domain. Namely, the shift theorem states that:

$$\textit{fft} \, \{x(t - \Delta t)\} = e^{-j\omega\Delta t} \cdot \textit{fft} \, \{x(t)\}$$

Hence, assuming that a signal in the time domain is casual and analytic, see equation (1), it is obtained:

$$\sum_{k=0}^{\infty} \textit{fft} \ \{x(t - k \cdot T)\} = \sum_{k=0}^{\infty} e^{-j\omega kT} \cdot \textit{fft} \ \{x(t)\} =$$

$$= \textit{fft} \ \{x(t)\} \cdot \sum_{k=0}^{\infty} e^{-j\omega kT} =$$

$$= \frac{\textit{fft} \ \{x(t)\}}{1 - e^{-j\omega T}}$$

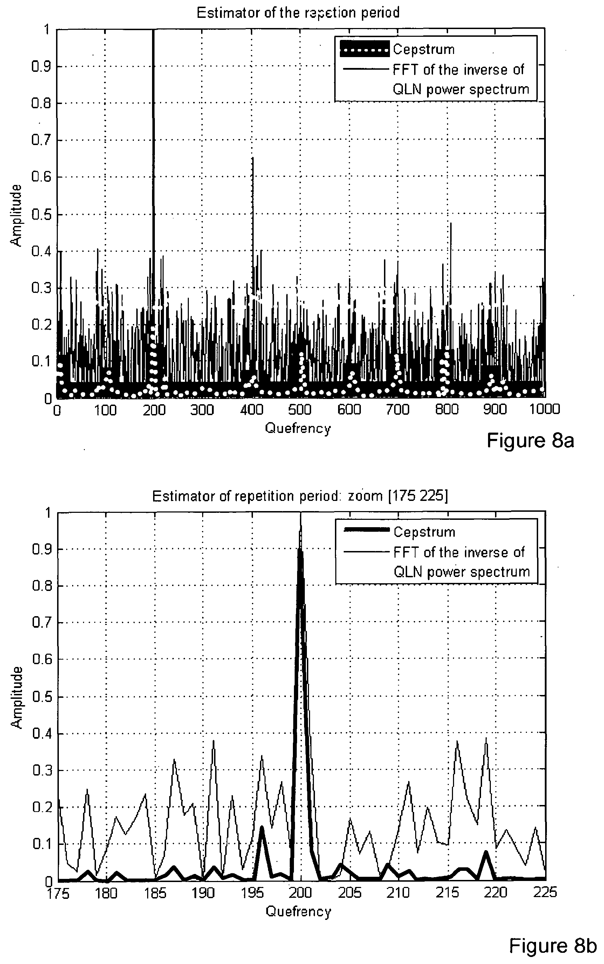

Thus, the resulting spectrum must comprise a factor $1 - e^{-j\omega T}$ in the denominator. Therefore, the simple Fourier transform of the power spectrum inverse must contain a spectral line corresponding to the period of the occurrence of the disturber signal, i.e. disturbing events. The ad-hoc method described above is less accurate than the Cepstrum analysis, but the calculation of the logarithm of the spectrum can be avoided. The results obtained using the two methods are compared in figures 8a-b.

In figures 8a-b, the cepstrum and Fourier transform of the inverted power spectrum are normalized to one. The deterioration of the precision of the analysis is obvious from the figure. The noise floor is considerably lower for the cepstrum method, thus making an estimation of the fundamental frequency based on the cepstrum method more robust. However, this should be considered in the light of the computational cost and practical conditions. The repetition frequency can be determined by

$$f_0 = \frac{f_s}{QUEFRENCY \ @ \ MAXIMUM \ GAMNITUDE}$$

Quefrency (cf. frequency) is the independent variable in a cepstral analysis. The dependent variable is called gamnitude (cf. magnitude).

Calculating the fundamental frequency using cepstrum or inverse of power spectrum has an obvious advantage over identifying the first spectral maximum or deriving it from the observed spacing of the consecutive spectral maxima. Only an integer value is obtained by the latter methods. Thus, the result of the latter methods may be inaccurate when the repetition (fundamental) frequency is not an integral multiple of the sampling frequency, $f_s$.

The reliability as well as consistency of the reconstructed spectrum of a disturbing signal improves when the measured spectrum may be interpolated, instead of being decimating with the rounded integral number. With the cepstral analysis, fractional evaluation of quefrency corresponding to maximum gamnitude is quite automated. Furthermore, the interpolation routines are rather undemanding numerically and can be straightforwardly applied. It can be concluded that the precision of the reconstructed spectrum can be significantly improved by enabling interpolation.

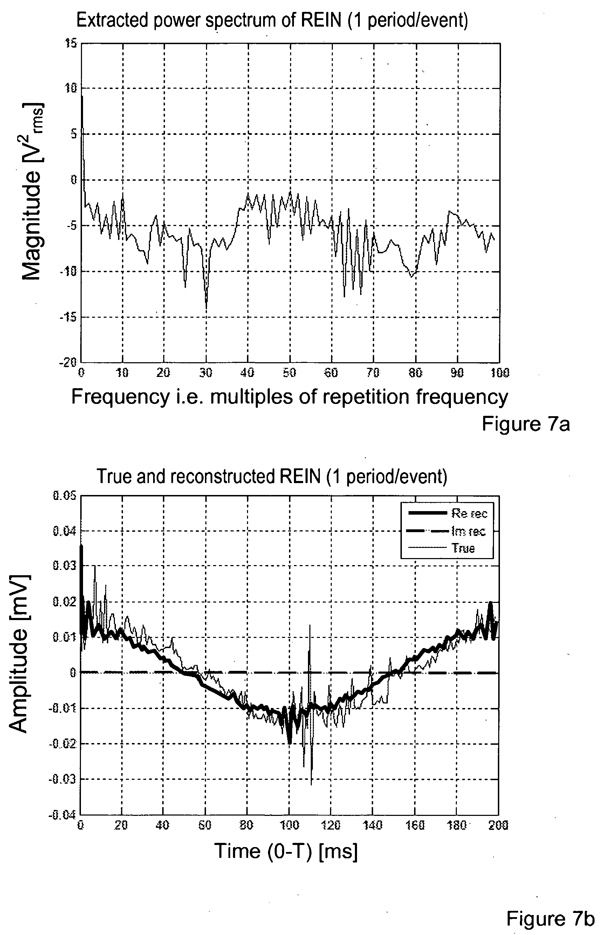

Once the fundamental or repetition frequency, $f_0$ has been identified, the power spectrum of the disturber may be isolated or extracted from the measured power spectrum illustrated in figure 6a. This may be done by e.g. extracting or "cutting out" only the frequency bins which correspond to multiples of $f_0$. Such an extracted power spectrum of the disturber is illustrated in figure 7a.

It should be noted that the extracted or reconstructed power spectrum of the disturber is a spectrum of a single disturbing event spread in time by a Dirac comb.

The extracted power spectrum of the disturber can be related to the magnitude of the disturbing event signal under the arbitrary condition that the phase of the disturbing event signal is set to zero. Then, the real part of the disturbing event in the frequency domain may be estimated as the square root of the power spectrum. The condition that the phase of the disturber is equal to zero implies that the imaginary part is also equal to zero. As a consequence of that, the disturbing event, when reconstructed in the time domain, is shifted in respect to the "true" position of the disturbing event (if the phase in fact is not equal to zero). It should be noted that the extracted or reconstructed power spectrum of the disturber is a spectrum of a single disturbing event spread in time by a Dirac comb.

Hence, after Hermite extending the spectrum of the disturber and performing an inverse Fourier transform on the extended spectrum, one full period of a single disturbing event in the time domain may be obtained. Such a period is illustrated in figure 7b. The reconstructed one period (event) of the disturber is compared with an arbitrarily chosen one period of the measured or "true" time domain signal, which was previously saved/recorded for comparison. The curves match up well. The differences may be explained by the fact that the reconstructed period is an averaged period,

7

while it is a unique, isolated, single period (event) that is used as a reference.

The "remaining" frequency bins, which do not comprise a contribution from the disturber, may be seen as an accompanying additive noise. Performing an Hermite extension followed by an inverse Fourier transform on these remaining frequency bins results in an estimate of the additive background noise in the time domain.

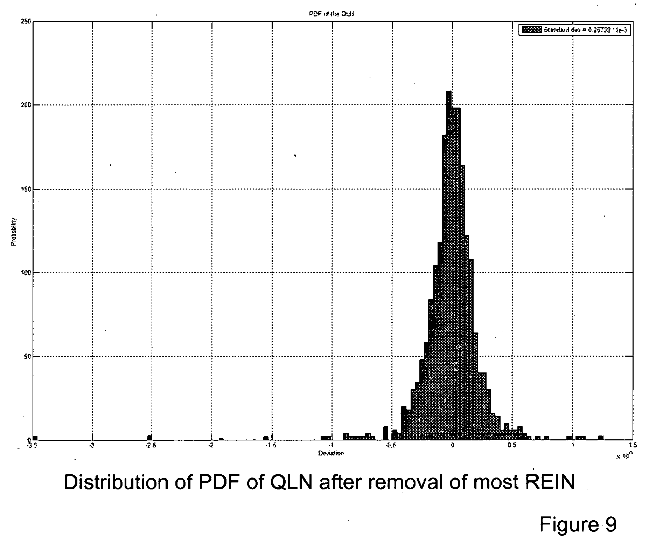

In the present example, the frequency bins from which harmonic components of the disturber was removed was set to zero, which may influence the estimate. Alternatively, these frequency bins could be replaced e.g. by a weighted mean of the nearest frequency bins. This would, however, also influence the estimate. In a statistical sense, however, this influence on the estimate has no consequences, or at least practically negligible consequences. The estimated time domain noise signal may still be examined in order to extract features such as variance, probability density function, etc. An example of such analysis is shown in figure 9 where the PDF of the accompanying additive noise is estimated.

In short, the exemplifying embodiments herein enable splitting of a measured xDSL power spectrum into two mutually independent, excluding parts: a part bearing the information about the disturber, and a part bearing solely the information about the accompanying additive noise

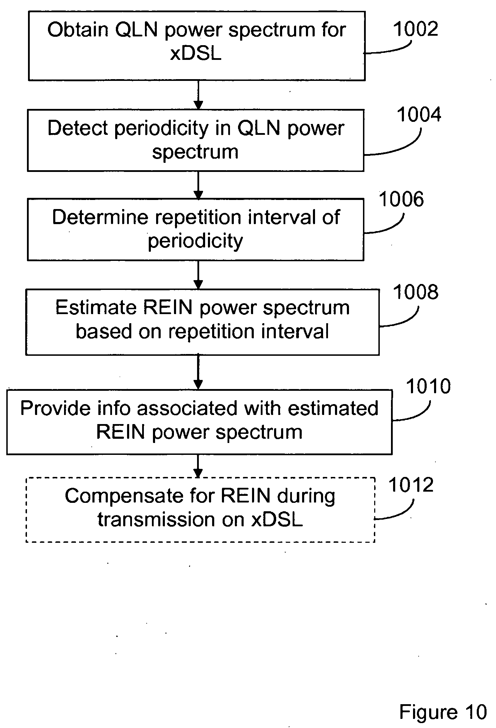

Exemplifying procedures, figures 10-11

An exemplifying embodiment of the procedure of supporting transmission over an xDSL in the presence of REIN will now be described with reference to figure 10. The procedure could be performed in a transceiver node, such as e.g. a so-called CPE (Customer Premises Equipment) or a DSLAM (Digital Subscriber Line Access Multiplexer).

Initially, a QLN power spectrum is obtained in an action 1002. This may be a standard QLN power spectrum as provided by standard equipment. The QLN power spectrum is analyzed, in search for a periodicity, which will be found or detected, in an action 1004, when a "sufficiently strong" REIN is present in the QLN. The repetition interval of the detected periodicity is determined in an action 1006. For example, Cepstrum analysis or the ad-hoc method described above may be used to derive the periodicity.

Then, the REIN power spectrum is estimated in an action 1008, based on the determined repetition interval. Information associated with the estimated REIN power spectrum is provided for use by a communication unit, in an action 1010. The information may be provided e.g. in form of an indicator having a predefined interpretation, a table, a message, or similar. The communication unit for which the information is provided may be located in the transceiver node, or in another transceiver node, e.g. in a remote end of the xDSL. By providing information associated with the estimated REIN power spectrum, the communication node is enabled to compensate 1012 for the REIN and configure transmission parameters, such as coding, interleaving and frequency scheduling, e.g. so-called "bit-loading" or "water-filling", based on the information, and thus achieve increased transmission performance.

The information associated with the REIN power spectrum may be one or more of e.g. the first frequency in which the estimated REIN power spectrum contributes to the QLN power spectrum measure; and/or a frequency in which the estimated REIN power spectrum contributes to the QLN power spectrum measure and the interval between frequencies in which the estimated REIN power spectrum contributes to the QLN power spectrum measure; two or more consecutive frequencies in which the estimated REIN power spectrum contributes to the QLN power spectrum measure and/or the time interval between REIN events. The information may further comprise information related to the remaining QLN power spectrum after removal of the estimated REIN power spectrum.

Further, statistic such as e.g. the distribution and/or the characteristic function of the remaining QLN power spectrum after removal of the REIN power spectrum may be estimated. The estimated statistic may be used to refine the estimate of the remaining QLN. Further, the type of noise source generating the REIN may be identified, based on the characteristics of the REIN, by comparing e.g. the characteristics of a reconstructed REIN event to reference information related to different possible REIN sources.

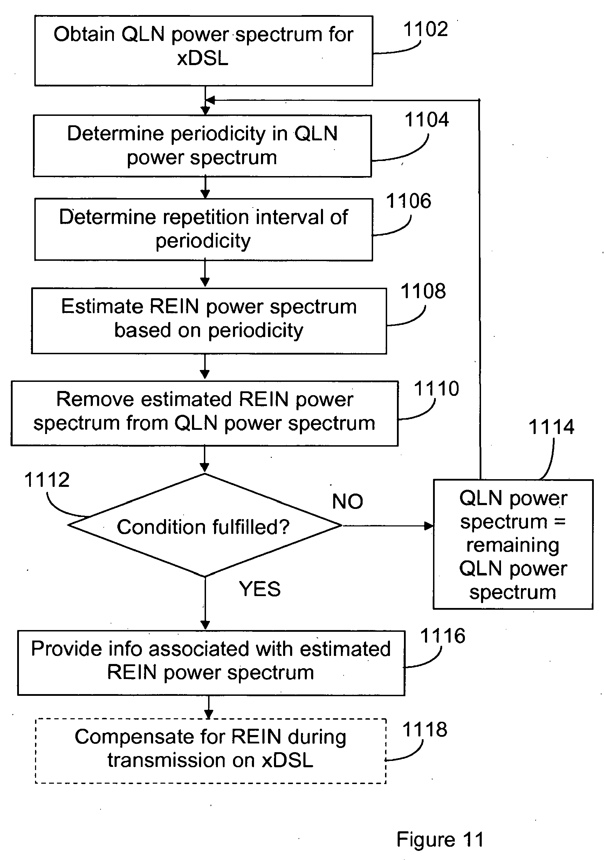

Figure 11 shows an exemplifying embodiment where procedure may be iterated, until a predefined termination criterion is fulfilled. The estimated REIN power spectrum is removed from the QLN power spectrum in an action 1110, where after it may be determined in an action 1112 whether the predetermined termination criterion is fulfilled or not. The criterion may be e.g. that no further REIN-related periodicity can be detected in the remaining QLN power spectrum; that a predefined number of iterations have been performed, and/or that the maximum magnitude of the remaining QLN power spectrum is below a predefined threshold.

When the condition is not fulfilled, the actions 1104-1112 may be repeated for the remaining QLN power spectrum, i.e. the QLN power spectrum (from the last iteration) after removal of the most recently estimated REIN power spectrum. The "change" of the QLN power spectrum which is input to action 1104 is illustrated by the action 1114, where the QLN power spectrum is set to the remaining QLN power spectrum.

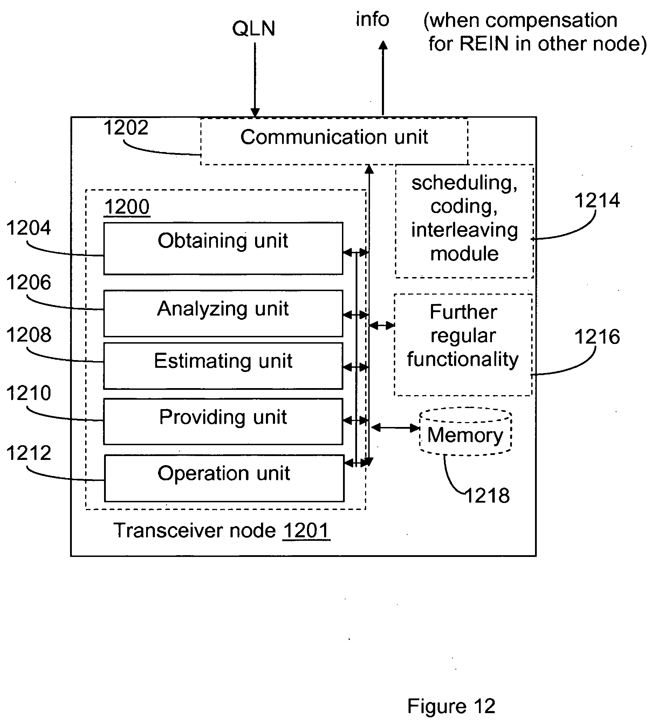

Exemplifying arrangement, figure 12

Below, an example arrangement 1200, adapted to enable the performance of the above described procedures related to supporting transmission over an xDSL in the presence of REIN, will be described with reference to figure 12. The arrangement is illustrated as being located in a transceiver node 1201 in a communication system. The transceiver node could be e.g. a CPE or a DSLAM. The arrangement 1200 is further illustrated as to communicate with other entities via a communication unit 1202 which may be considered to comprise conventional means for wired communication over xDSL lines. The communication unit is further assumed to comprise or be closely associated with functionality for coding/decoding, interleaving/deinterleaving and scheduling, which is illustrated as the module 1214. The arrangement or transceiver node may further comprise other "standard" functional units 1216, and one or more storage units 1218.

The arrangement 1200 comprises an obtaining unit 1204, which is adapted to obtain a power spectrum of the measured QLN for the xDSL. It is assumed that the QLN comprises REIN. For example, such a power spectrum is provided by most standard equipment for xDSL communication. The arrangement 1200 further comprises an analyzing unit 1206, which is adapted to detect a periodicity in the QLN power spectrum, and further adapted to determine the repetition interval of said periodicity. The arrangement 1200 further comprises an estimating unit 1208, adapted to estimate the power spectrum of the REIN, based on the repetition interval of said periodicity. The arrangement 1200 further comprises and a providing unit 1210, which is adapted to provide information associated with the estimated REIN power spectrum for use by a communication unit, thus enabling mitigation or compensation of potentially unfavorable influence/effects of the REIN on a transmission over the xDSL. The communication unit performing the mitigation or compensation could be the communication unit 1202, or a corresponding unit e.g. in another transceiver node, which is responsible for or performs noise mitigation or compensation over the xDSL in question.

The providing unit may be adapted to provide information on at least one of e.g. the first and/or another frequency, in which the estimated REIN power spectrum contributes to the QLN power spectrum measure; the interval between frequencies in which the estimated REIN power spectrum contributes to the QLN power spectrum measure; the time interval between REIN events and/or information related to the remaining QLN power spectrum after removal of the estimated REIN power spectrum.

The arrangement 1200 may further comprise an operation unit 1212, which is adapted to remove the estimated REIN power spectrum from the QLN power spectrum, thus obtaining a remaining QLN power spectrum. The arrangement may further be adapted to iterate the actions required for estimating a REIN power spectrum from the remaining QLN power spectrum, and removing said estimated REIN power spectrum from the current remaining QLN, until a predefined termination criterion is fulfilled.

The arrangement 1200 may further be adapted to isolate the estimated REIN power spectrum from the QLN power spectrum. The arrangement 1200 may further be adapted to perform an inverse Fourier transform on the isolated REIN power spectrum, such that a single REIN event is reconstructed in the time domain. The arrangement 1200 may further be adapted to identify the type of REIN source causing the REIN, based on the characteristics of the reconstructed REIN event. In order to enable such identification, information on characteristics of different possible REIN sources should be made available to the arrangement 1200.

The arrangement 1200 may further be adapted to estimate the magnitude of the remaining QLN after removal of the estimated REIN power spectrum from the QLN power spectrum. Further, the arrangement 1200 could be adapted to refine the estimate of the REIN power spectrum by adjusting the amplitude of the estimated REIN power spectrum based on the estimated magnitude of the remaining QLN. The arrangement may further be adapted to estimate e.g. the statistic, such as distribution and/or characteristic function, of the remaining QLN power spectrum after removal of the REIN power spectrum; and to refine the estimation of the remaining QLN based e.g. on its distribution and/or characteristic function. The arrangement may further be adapted to identify the type of noise source generating the REIN, based on characteristics of the REIN

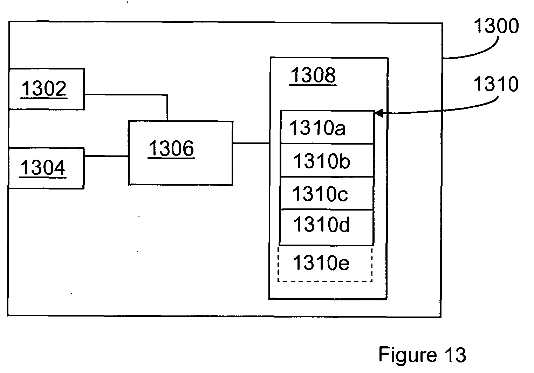

Exemplifying alternative arrangement, figure 13

Figure 13 illustrates an alternative arrangement 1300 in a transceiver node, where a computer program 1310 is carried by a computer program product 1308, connected to a processor 1306. The computer program product 1308 comprises a computer readable medium on which the computer program 1310 is stored. The computer program 1310 may be configured as a computer program code structured in computer program modules. Hence in the example embodiments described, the code means in the computer program 1310 comprises an obtaining module 1310a for obtaining obtain a power spectrum of the measured QLN for the xDSL. The computer program further comprises an analyzing module 1310b for detecting a periodicity in the QLN power spectrum, and determining the repetition interval of said periodicity. The computer program 1310 further comprises an estimating module 1310c for estimating the power spectrum of the REIN, and a providing module 1310d for providing information associated with the estimated REIN power spectrum. The computer program may further comprise e.g. an operation module 1310e for removing the estimated REIN power spectrum from the QLN power spectrum.

The modules 1310a-e could essentially perform the actions of the flows illustrated in figures 10 and 11, to emulate the arrangement in a transceiver node illustrated in figure 12. In other words, when the different modules 1310a-e are executed in the processing unit 1306, they correspond to the units 1204-1212 of figure 12. For example, the computer program product may be a flash memory, a RAM (Random-access memory) ROM (Read-Only Memory) or an EEPROM (Electrically Erasable Programmable ROM), and the computer program modules 1310a-e could in alternative embodiments be distributed on different computer program products in the form of memories within the arrangement 1300 and/or the transceiver node. The units 1302 and 1304 connected to the processor represent communication units e.g. input and output.

Although the code means in the embodiment disclosed above in conjunction with figure 13 are implemented as computer program modules which when executed in the processing unit causes the arrangement and/or transceiver node to perform the actions described above in the conjunction with figures mentioned above, at least one of the code means may in alternative embodiments be implemented at least partly as hardware circuits.

It is be noted that the choice of interacting units or modules, as well as the naming of the units are only for exemplifying purpose, and network nodes suitable to execute any of the methods described above may be configured in a plurality of alternative ways in order to be able to execute the suggested process actions.

It should also be noted that the units or modules described in this disclosure are to be regarded as logical entities and not with necessity as separate physical entities.

ABBREVIATIONS

| | |
|---|---|
| ADSL | Asymmetric Digital Subscriber Line |
| CPE | Customer Premises Equipment |
| DMT | Discrete Multi-Tone |
| DSL | Digital Subscriber Line |
| DSLAM | Digital Subscriber Line Access Multiplexer |
| INP | Impulse Noise Protection |
| PDF | Probability Density Function |
| QLN | Quiet Line Noise |
| REIN | Repetitive Electrical Impulse Noise |
| VDSL | Very-high-bitrate DSL |
| xDSL | VDSL, VDSL2, ADSL, etc. |

**Claims**

1. Method in a transceiver node for supporting transmission over a Digital Subscriber Line (xDSL) in the presence of Repetitive Electrical Impulse Noise (REIN), the method comprising:

- obtaining (1002) a power spectrum of the measured Quiet Line Noise (QLN) for the xDSL, the QLN comprising REIN,
- detecting (1004) a periodicity in the QLN power spectrum,
- determining (1006) the repetition interval of the periodicity,
- estimating (1008) the power spectrum of the REIN, based on the repetition interval of said periodicity, and
- providing (1010) information associated with the estimated REIN power spectrum for use by a communication unit.
- removing (1112) the estimated REIN power spectrum from the QLN power spectrum, thus obtaining a remaining QLN power spectrum,
- performing the procedure (1114, 1104-1112) of determining a periodicity and a repetition interval and estimating the power spectrum of a REIN based on the remaining QLN power spectrum,
- iterating the removing of estimated REIN power spectrum and performing of the procedure until at least one of the following applies:

- no further REIN related periodicity can be detected in the remaining QLN power spectrum,
- a predefined number of iterations have been performed,
- the maximum magnitude of the remaining QLN power spectrum is below a predefined threshold,

- a predefined termination criterion is fulfilled.

2. Method according to claim 1, wherein the mitigation of the effect of the REIN on transmission involves adapting (1012, 1118) at least one of the following actions associated with the transmission over the xDSL, based on the information associated with the estimated REIN power spectrum:

   - encoding,
   - interleaving,
   - frequency scheduling.

3. Method according to any of the preceding claims, further comprising:

   - identifying the type of noise source generating the REIN, based on the estimated REIN power spectrum

4. Method according to any of the preceding claims, wherein the information associated with the estimated REIN power spectrum comprises information on at least one of the following:

   - the first frequency in which the estimated REIN power spectrum contributes to the QLN power spectrum measure,
   - a frequency in which the estimated REIN power spectrum contributes to the QLN power spectrum measure,
   - the interval between frequencies in which the estimated REIN power spectrum contributes to the QLN power spectrum measure,
   - the time interval between REIN events,
   - information related to the remaining QLN power spectrum after removal of the estimated REIN power spectrum,
   - two or more consecutive frequencies in which the estimated REIN power spectrum contributes to the QLN power spectrum measure.

5. Method according to any of the preceding claims, further comprising at least one of:

   - isolating the estimated REIN power spectrum from the QLN power spectrum,
   - performing an inverse Fourier transform on the isolated REIN power spectrum, thus reconstructing a single REIN event,
   - identifying the type of REIN source, based on the characteristics of the reconstructed REIN event.

6. Method according to any of the preceding claims, wherein the estimating of the REIN power spectrum involves identifying equidistant frequencies in the QLN power spectrum measure, in which the REIN contributes to the QLN power spectrum.

7. Method according to any of the preceding claims, wherein the repetition interval is determined using one of:

   - cepstral analysis,
   - Fourier transform of the power spectrum inverse.

8. Method according to any of the preceding claims, further comprising:

   - estimating the magnitude of the remaining QLN after removal of the estimated REIN power spectrum from the QLN power spectrum.

9. Method according to claim 8, further comprising at least one of:

   - estimating the statistic of the remaining QLN power spectrum after removal of the REIN power spectrum,
   - refining the estimation of the remaining QLN, based on estimated statistic of the remaining QLN power spectrum.

10. Arrangement in a transceiver node, for supporting transmission over a Digital Subscriber Line (xDSL) in the presence of Repetitive Electrical Impulse Noise (REIN), the arrangement comprising:

    - an obtaining unit (1204, 1310a), adapted to obtain a power spectrum of the measured Quiet Line Noise (QLN) for the xDSL, the QLN comprising REIN,

- an analyzing unit (1206, 1310b), adapted to detect a periodicity in the QLN power spectrum, and further adapted to determine the repetition interval of said periodicity,
- an estimating unit (1208, 1310c), adapted to estimate the power spectrum of the REIN, based on the repetition interval of said periodicity, and
- a providing unit (1210, 1310d), adapted to provide information associated with the estimated REIN power spectrum for use by a communication unit,
- an operation unit (1212,1310e), adapted to remove the estimated REIN power spectrum from the QLN power spectrum, thus obtaining a remaining QLN power spectrum, the arrangement further being adapted to perform the determining of a periodicity and a repetition interval and the estimating of the power spectrum of a REIN based on the remaining QLN power spectrum and iterate the removing of estimated REIN power spectrum and performing of the procedure until at least one of the following applies:

- no further REIN related periodicity can be detected in the remaining QLN power spectrum,
- a predefined number of iterations have been performed,
- the maximum magnitude of the remaining QLN power spectrum is below a predefined threshold,
- a predefined termination criterion is fulfilled

11. Arrangement according to claim 10, wherein the arrangement is further adapted to perform at least one of:

- isolate the estimated REIN power spectrum from the QLN power spectrum;
- perform an inverse Fourier transform on the isolated REIN power spectrum, thus reconstructing a single REIN event;
- identify the type of REIN source causing the REIN, based on the characteristics of the reconstructed REIN event.

12. Arrangement according to any of the claims 10-11, wherein the estimating unit is further adapted to estimate the magnitude of the remaining QLN after removal of the estimated REIN power spectrum from the QLN power spectrum.

**Patentansprüche**

1. Verfahren in einem Sendeempfangsknoten zum Unterstützen von Übertragung über eine digitale Teilnehmerleitung (xDSL) bei Vorliegen von sich wiederholendem elektrischem Impulsrauschen (REIN), wobei das Verfahren umfasst:

- Einholen (1002) eines Leistungsspektrums des gemessenen Leerlauf-Leitungsrauschens (QLN) für die xDSL, wobei das QLN REIN umfasst,
- Erkennen (1004) einer Periodizität im QLN-Leistungsspektrum,
- Bestimmen (1006) des Wiederholungsintervalls der Periodizität,
- Schätzen (1008) des Leistungsspektrums des REINs basierend auf dem Wiederholungsintervall der Periodizität, und
- Bereitstellen (1010) von Informationen, die mit dem geschätzten REIN-Leistungsspektrum assoziiert sind, zur Verwendung durch eine Kommunikationseinheit,
- Entfernen (1112) des geschätzten REIN-Leistungsspektrums aus dem QLN-Leistungsspektrum, um dadurch ein restliches QLN-Leistungsspektrum zu erhalten,
- Durchführen der Prozedur (1114, 1104 - 1112) des Bestimmens einer Periodizität und eines Wiederholungsintervalls und Schätzens des Leistungsspektrums eines REINs basierend auf dem restlichen QLN-Leistungsspektrum,
- Wiederholen des Entfernens des geschätzten REIN-Leistungsspektrums und Durchführen der Prozedur, bis mindestens eines von Folgendem gilt:

- es kann keine weitere REIN-bezogene Periodizität im restlichen QLN-Leistungsspektrum erkannt werden,
- es wurde eine vordefinierte Anzahl von Iterationen durchgeführt,
- die maximale Größe des restlichen QLN-Leistungsspektrums liegt unter einer vordefinierten Schwelle,
- es wird ein vordefiniertes Beendigungskriterium erfüllt.

2. Verfahren nach Anspruch 1, wobei die Minderung der Wirkung des REINs auf Übertragung ein Anpassen (1012, 1118) mindestens einer der folgenden mit der Übertragung der xDSL assoziierten Aktionen basierend auf den mit dem geschätzten REIN-Leistungsspektrum assoziierten Informationen umfasst:

- Codieren,
- Verschachteln,
- Disponieren von Frequenzen.

3. Verfahren nach einem der vorhergehenden Ansprüche, ferner umfassend:

- Identifizieren des Typs von Rauschquelle, die das REIN erzeugt, basierend auf dem geschätzten REIN-Leistungsspektrum.

4. Verfahren nach einem der vorhergehenden Ansprüche, wobei die mit dem geschätzten REIN-Leistungsspektrum assoziierten Informationen Informationen über mindestens eines von Folgendem umfassen:

- der ersten Frequenz, auf welcher das geschätzte REIN-Leistungsspektrum zur Messung des QLN-Leistungsspektrums beiträgt,
- einer Frequenz, auf welcher das geschätzte REIN-Leistungsspektrum zur Messung des QLN-Leistungsspektrums beiträgt,
- dem Intervall zwischen Frequenzen, auf welchen das geschätzte REIN-Leistungsspektrum zur Messung des QLN-Leistungsspektrums beiträgt,
- dem Zeitintervall zwischen REIN-Ereignissen,
- Informationen in Bezug auf das restliche QLN-Leistungsspektrum nach der Entfernung des geschätzten REIN-Leistungsspektrums,
- zwei oder mehreren aufeinander folgenden Frequenzen, auf welchen das geschätzte REIN-Leistungsspektrum zur Messung des QLN-Leistungsspektrums beiträgt.

5. Verfahren nach einem der vorhergehenden Ansprüche, ferner umfassend wenigstens eines von Folgendem:

- Isolieren des geschätzten REIN-Leistungsspektrums vom QLN-Leistungsspektrum,
- Durchführen einer inversen Fourier-Transformation am isolierten REIN-Leistungsspektrum, um dadurch ein einzelnes REIN-Ereignis wiederherzustellen,
- Identifizieren des Typs von REIN-Quelle basierend auf den Charakteristiken des wiederhergestellten REIN-Ereignisses.

6. Verfahren nach einem der vorhergehenden Ansprüche, wobei das Schätzen des REIN-Leistungsspektrums ein Identifizieren von äquidistanten Frequenzen in der Messung des QLN-Leistungsspektrums umfasst, auf welchen das REIN zum QLN-Leistungsspektrum beiträgt.

7. Verfahren nach einem der vorhergehenden Ansprüche, wobei das Wiederholungsintervall bestimmt wird unter Verwendung von einer von

- Spektralanalyse,
- inverser Fourier-Transformation des Leistungsspektrums.

8. Verfahren nach einem der vorhergehenden Ansprüche, ferner umfassend:

- Schätzen der Größe des restlichen QLNs nach der Entfernung des geschätzten REIN-Leistungsspektrums aus dem QLN-Leistungsspektrum.

9. Verfahren nach Anspruch 8, ferner umfassend mindestens eines von Folgendem:

- Schätzen der Statistik des restlichen QLN-Leistungsspektrums nach der Entfernung des geschätzten REIN-Leistungsspektrums,
- Verfeinern der Schätzung des restlichen QLNs basierend auf der geschätzten Statistik des restlichen QLN-Leistungsspektrums.

10. Anordnung in einem Sendeempfangsknoten zum Unterstützen von Übertragung über eine digitale Teilnehmerleitung (xDSL) bei Vorliegen von sich wiederholendem elektrischem Impulsrauschen (REIN), wobei die Anordnung umfasst:

- eine Einholeinheit (1204, 1310a), die so ausgelegt ist, dass sie ein Leistungsspektrum des gemessenen Leerlauf-Leitungsrauschens (QLN) für die xDSL einholt, wobei das QLN REIN umfasst,
- eine Analyseeinheit (1206, 1310b), die so ausgelegt ist, dass sie eine Periodizität im QLN-Leistungsspektrum erkennt, und ferner so ausgelegt ist, dass sie das Wiederholungsintervall der Periodizität bestimmt,
- eine Schätzeinheit (1208, 1310c), die so ausgelegt ist, dass sie das Leistungsspektrum des REINs basierend auf dem Wiederholungsintervall der Periodizität schätzt, und
- eine Bereitstellungseinheit (1210, 1310d), die so ausgelegt ist, dass sie Informationen, die mit dem geschätzten REIN-Leistungsspektrum assoziiert sind, zur Verwendung durch eine Kommunikationseinheit bereitstellt,
- eine Betriebseinheit (1212, 1310e), die so ausgelegt ist, dass sie das geschätzte REIN-Leistungsspektrum aus dem QLN-Leistungsspektrum entfernt, um dadurch ein restliches QLN-Leistungsspektrum zu erhalten, wobei die Anordnung ferner so ausgelegt ist, dass sie das Bestimmen einer Periodizität und eines Wiederholungsintervalls und das Schätzen des Leistungsspektrums eines REINs basierend auf dem restlichen QLN-Leistungsspektrum durchführt und das Entfernen des geschätzten REIN-Leistungsspektrums und Durchführen der Prozedur wiederholt, bis mindestens eines von Folgendem gilt:

- es kann keine weitere REIN-bezogene Periodizität im restlichen QLN-Leistungsspektrum erkannt werden,
- es wurde eine vordefinierte Anzahl von Iterationen durchgeführt,
- die maximale Größe des restlichen QLN-Leistungsspektrums liegt unter einer vordefinierten Schwelle,
- es wird ein vordefiniertes Beendigungskriterium erfüllt.

11. Anordnung nach Anspruch 10, wobei die Anordnung ferner so ausgelegt ist, dass sie mindestens eines durchführt von Folgendem:

- Isolieren des geschätzten REIN-Leistungsspektrums vom QLN-Leistungsspektrum,
- Durchführen einer inversen Fourier-Transformation am isolierten REIN-Leistungsspektrum, um dadurch ein einzelnes REIN-Ereignis wiederherzustellen,
- Identifizieren des Typs von REIN-Quelle basierend auf den Charakteristiken des wiederhergestellten REIN-Ereignisses.

12. Anordnung nach einem der Ansprüche 10 - 11, wobei die Schätzeinheit ferner so ausgelegt ist, dass sie die Größe des restlichen QLNs nach der Entfernung des geschätzten REIN-Leistungsspektrums aus dem QLN-Leistungsspektrum schätzt.

**Revendications**

1. Procédé dans un noeud d'émetteur-récepteur pour supporter la transmission via une ligne d'abonné numérique (xDSL) en présente de bruit répétitif d'impulsion électrique (REIN), le procédé comprenant les étapes consistant à :

- obtenir (1002) un spectre d'énergie du bruit de ligne tranquille (QLN) mesuré pour la xDSL, le QLN comprenant le REIN,
- détecter (1004) une périodicité dans le spectre d'énergie du QLN,
- déterminer (1006) l'intervalle de répétition de la périodicité,
- estimer (1008) le spectre d'énergie du REIN sur la base de l'intervalle de répétition de ladite périodicité et
- fournir (1010) des informations associées au spectre d'énergie du REIN estimé pour utilisation par une unité de communication,
- éliminer (1112) le spectre d'énergie du REIN estimé du spectre d'énergie du QLN en obtenant ainsi un spectre d'énergie de QLS restant,
- effectuer la procédure (1114, 1104-1112) de détermination d'une périodicité et d'un intervalle de répétition et estimer le spectre d'énergie d'un REIN sur la base du spectre d'énergie du QLN restant,
- répéter l'élimination du spectre d'énergie du REIN estimé et effectuer la procédure jusqu'à ce qu'au moins l'une des situations suivantes s'applique :

- aucune autre périodicité rapportée au REIN ne peut être détectée dans le spectre d'énergie du QLN restant,
- un nombre prédéfini d'itérations ont été effectuées,
- la grandeur maximale du spectre d'énergie du QLN restant se situe en dessous d'un seuil prédéfini et
- un critère de terminaison prédéfini est satisfait.

2. Procédé selon la revendication 1, dans lequel l'atténuation de l'effet du REIN sur la transmission implique l'adaptation (1012, 1118) d'au moins l'une des actions suivantes associées à la transmission via le xDSL sur la base des informations associées au spectre d'énergie du REIN estimé :

- codage,
- imbrication et
- programmation de fréquence.

3. Procédé selon l'une quelconque des revendications précédentes, comprenant en outre l'étape consistant à :

- identifier le type de source de bruit générant le REIN sur la base du spectre d'énergie du REIN estimé.

4. Procédé selon l'une quelconque des revendications précédentes, dans lequel les informations associées au spectre d'énergie du REIN estimé comprennent des informations sur au moins l'une des grandeurs suivantes :

- la première fréquence dans laquelle le spectre d'énergie du REIN estimé contribue à la mesure du spectre d'énergie du QLN,
- une fréquence dans laquelle le spectre d'énergie du REIN estimé contribue à la mesure du spectre d'énergie du QLN,
- l'intervalle entre les fréquences dans lesquelles le spectre d'énergie du REIN estimé contribue à la mesure du spectre d'énergie du QLN,
- l'intervalle de temps entre des événements de REIN,
- des informations se rapportant au spectre d'énergie du QLN restant après élimination du spectre d'énergie du REIN estimé,
- deux fréquences consécutives ou plus dans lesquelles le spectre d'énergie du REIN estimé contribue à la mesure du spectre d'énergie du QLN.

5. Procédé selon l'une quelconque des revendications précédentes, comprenant en outre l'une ou l'autre des étapes consistant à :

- isoler le spectre d'énergie du REIN estimé du spectre d'énergie du QLN,
- effectuer une transformée inverse de Fourier sur le spectre d'énergie du REIN isolé, en reconstruisant de la sorte un événement de REIN unique, et
- identifier le type de source de REIN sur la base des caractéristiques de l'événement de REIN reconstruit.

6. Procédé selon l'une quelconque des revendications précédentes, dans lequel l'estimation du spectre d'énergie du REIN implique l'identification de fréquences équidistantes dans la mesure du spectre d'énergie du QLN, dans lequel le REIN contribue au spectre d'énergie du QLN.

7. Procédé selon l'une quelconque des revendications précédentes, dans lequel l'intervalle de répétition est déterminé en utilisant l'une ou l'autre des actions suivantes :

- une analyse cepstrale,
- une transformée de Fourier de l'inverse du spectre d'énergie.

8. Procédé selon l'une quelconque des revendications précédentes, comprenant en outre l'étape consistant à :

- estimer la grandeur du QLN restant après élimination du spectre d'énergie du REIN estimé du spectre d'énergie du QLN.

9. Procédé selon la revendication 8, comprenant en outre au moins l'une des étapes consistant à :

- estimer la statistique du spectre d'énergie du QLN restant après élimination du spectre d'énergie du REIN, et
- affiner l'estimation du QLN restant sur la base de la statistique estimée du spectre d'énergie du QLN restant.

10. Aménagement dans un noeud d'émetteur-récepteur pour supporter une transmission via une ligne d'abonné numérique (xDSL) en présence d'un bruit répétitif d'impulsion électrique (REIN), l'aménagement comprenant :

- une unité d'obtention (1204, 1310a) qui est à même d'obtenir un spectre d'énergie du bruit de ligne tranquille mesuré (QLN) pour le xDSL, le QLN comprenant le REIN,

- une unité d'analyse (1206, 1310b) qui est à même de détecter une périodicité dans le spectre d'énergie du QLN et encore à même de déterminer l'intervalle de répétition de ladite périodicité,

- une unité d'estimation (1208, 1310c) qui est à même d'estimer le spectre d'énergie du REIN sur la base de l'intervalle de répétition de ladite périodicité et

- une unité de fourniture (1210, 1310d) qui est à même de fournir des informations associées au spectre d'énergie du REIN estimé pour utilisation par une unité de communication,

- une unité opérationnelle (1212, 1310) qui est à même d'éliminer le spectre d'énergie du REIN estimé du spectre d'énergie du QLN, en obtenant de la sorte un spectre d'énergie du QLN restant, l'aménagement étant en outre à même d'effectuer la détermination d'une périodicité et d'un intervalle de répétition et l'estimation du spectre d'énergie d'un REIN sur la base du spectre d'énergie du QLN restant et de répéter l'élimination du spectre d'énergie du REIN estimé et d'effectuer la procédure jusqu'à ce qu'au moins l'une quelconque des situations suivantes s'applique .

- aucune autre périodicité apparentée au REIN ne peut être détectée dans le spectre d'énergie du QLN restant,

- un nombre prédéfini d'itérations ont été effectuées,

- la grandeur maximale du spectre d'énergie du QLN restant se situe en dessous d'un seuil prédéfini, et

- un critère de terminaison prédéfini est satisfait.

11. Aménagement selon la revendication 10, dans lequel l'aménagement est en outre à même d'effectuer au moins l'une ou l'autre des étapes consistant à :

- isoler le spectre d'énergie du REIN estimé du spectre d'énergie du QLN ;

- effectuer une transformée de Fourier inverse sur le spectre d'énergie du REIN isolé, en reconstruisant de la sorte un seul événement de REIN ; et

- identifier le type de source de REIN qui provoque le REIN sur la base des caractéristiques de l'événement de REIN reconstruit.

12. Aménagement selon l'une quelconque des revendications 10 à 11, dans lequel l'unité d'estimation est en outre à même d'estimer la grandeur du QLN restant après élimination du spectre d'énergie du REIN estimé du spectre d'énergie du QLN.

Figure 1

Figure 2

## Spectrum of single REIN event

Frequency [Hz]

Figure 3

## Spectrum of the multiple REIN events

Frequency [Hz]

Figure 4

Figure 5

Power Spectrum of REIN

Figure 6a

Zoom of Power Spectrum of REIN

Figure 6b

## Extracted power spectrum of REIN (1 period/event)

Figure 7a

## True and reconstructed REIN (1 period/event)

Figure 7b

Estimator of the repetion period

Figure 8a

Estimator of repetition period: zoom [175 225]

Figure 8b

Distribution of PDF of QLN after removal of most REIN

Figure 9

Obtain QLN power spectrum for xDSL — 1002

Detect periodicity in QLN power spectrum — 1004

Determine repetition interval of periodicity — 1006

Estimate REIN power spectrum based on repetition interval — 1008

Provide info associated with estimated REIN power spectrum — 1010

Compensate for REIN during transmission on xDSL — 1012

Figure 10

Obtain QLN power spectrum for xDSL    1102

Determine periodicity in QLN power spectrum    1104

Determine repetition interval of periodicity    1106

Estimate REIN power spectrum based on periodicity    1108

Remove estimated REIN power spectrum from QLN power spectrum    1110

1114

1112    Condition fulfilled?    NO    →    QLN power spectrum = remaining QLN power spectrum

YES

Provide info associated with estimated REIN power spectrum    1116

Compensate for REIN during transmission on xDSL    1118

Figure 11

QLN          info     (when compensation
                        for REIN in other node)

1202    Communication unit

1200

1204    Obtaining unit

scheduling,
coding,
interleaving
module          1214

1206    Analyzing unit

1208    Estimating unit

Further
regular
functionality   1216

1210    Providing unit

1212    Operation unit

Memory

1218

Transceiver node 1201

Figure 12

Figure 13

**EP 2 686 966 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008094082 A1
- WO 2008016585 A2
- WO 2010028018 A1